(19) Europäisches Patentamt
European Patent Office
Office européen des brevets

(11) EP 1 910 423 B1

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(21) Anmeldenummer: **06777908.2**

(22) Anmeldetag: **21.07.2006**

(51) Int Cl.:
***C08F 2/24*** *(2006.01)* ***C09D 123/18*** *(2006.01)*
***C09D 133/04*** *(2006.01)* ***C09J 123/18*** *(2006.01)*
***C09J 133/04*** *(2006.01)*

(86) Internationale Anmeldenummer:
**PCT/EP2006/064547**

(87) Internationale Veröffentlichungsnummer:
**WO 2007/012616 (01.02.2007 Gazette 2007/05)**

(54) **VERFAHREN ZUR HERSTELLUNG EINER WÄSSRIGEN POLYMERISATDISPERSION**

PROCESS FOR PREPARING AN AQUEOUS ADDITION-POLYMER DISPERSION

PROCÉDÉ DE PRODUCTION D'UNE DISPERSION POLYMÈRE AQUEUSE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.07.2005 DE 102005035692**

(43) Veröffentlichungstag der Anmeldung:
**16.04.2008 Patentblatt 2008/16**

(73) Patentinhaber: **BASF SE**
**67056 Ludwigshafen (DE)**

(72) Erfinder: **VENKATESH, Rajan**
**68167 Mannheim (DE)**

(56) Entgegenhaltungen:
**GB-A- 1 116 990**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein Verfahren zur Herstellung einer wässrigen Polymerisatdispersion durch radikalisch initiierte wässrige Emulsionspolymerisation von ethylenisch ungesättigten Monomeren in Anwesenheit wenigstens eines Dispergiermittels und wenigstens eines Radikalinitiators, welches dadurch gekennzeichnet ist, dass zur Emulsionspolymerisation

| | |
|---|---|
| 1 bis 49,99 Gew.-% | eines 5 bis 12 C-Atome aufweisenden Alkens [Monomer A], und |
| 50 bis 98,99 Gew.-% | eines Esters auf Basis einer 3 bis 6 C-Atome aufweisenden $\alpha,\beta$-monoethylenisch ungesättigten Mono- oder Dicarbonsäure und eines 1 bis 12 C-Atome aufweisenden Alkanols [Monomer B], und |
| 0.01 bis 10 Gew.-% | einer 3 bis 6 C-Atome aufweisenden $\alpha,\beta$-monoethylenisch ungesättigten Mono- oder Dicarbonsäure und/oder deren Amid [Monomer C] |

eingesetzt werden und sich die Monomeren A bis C zu 100 Gew.-% addieren.

Verfahren zur Herstellung von Polymerisaten auf Basis von Alkenen und anderen copolymerisierbaren ethylenisch ungesättigten Verbindungen sind dem Fachmann hinreichend bekannt. Dabei erfolgt die Copolymerisation im wesentlichen in Form einer Lösungspolymerisation (siehe beispielsweise A. Sen et al., Journal American Chemical Society, 2001, 123, Seiten 12738 bis12739; B. Klumperman et al., Macromolecules, 2004, 37, Seiten 4406 bis 4416; A. Sen et al., Journal of Polymer Science, Part A: Polymer Chemistry, 2004, 42(24), Seiten 6175 bis 6192; WO 03/042254, WO 03/091297 oder EP-A 1384729) oder in Form einer wässrigen Emulsionspolymerisation, wobei diese insbesondere auf Basis des niedrigsten Alkens Ethen erfolgt (siehe beispielsweise US-A 4,921,898, US-A 5,070,134, US-A 5,110,856, US-A 5,629,370, EP-A 295727, EP-A 757065, EP-A 1114833 oder DE-A 196 20 817).

Zur radikalisch initiierten wässrigen Emulsionspolymerisation unter Verwendung höherer Alkene ist von nachfolgendem Stand der Technik auszugehen.

In der DE-OS 1720277 wird ein Verfahren zur Herstellung von filmbildenden wässrigen Polymerisatdispersionen unter Verwendung von Vinylestern und 1-Octen offenbart. Dabei kann das Gewichtsverhältnis von Vinylester zu 1-Octen von 99:1 bis 70:30 betragen. Optional können die Vinylester im untergeordneten Maße im Gemisch mit anderen copolymerisierbaren ethylenisch ungesättigten Verbindungen zur Emulsionspolymerisation eingesetzt werden.

S.M. Samoilov beschreibt in J. Macromol. Sci. Chem., 1983, A19(1), Seiten 107 bis 122, die radikalisch initiierte wässrige Emulsionspolymerisation von Propen mit unterschiedlichen ethylenisch ungesättigen Verbindungen. Dabei wurde als Ergebnis festgehalten, dass die Copolymerisation von Propen mit ethylenisch ungesättigten Verbindungen, welche stark elektronenziehende Gruppen aufweisen, wie beispielsweise Chlortrifluorethylen, Trifluoracrylonitril, Maleinsäureanhydrid oder Methyltrifluoracrylat, Polymerisate mit einem deutlich höheren Propenanteil bzw. Copolymerisate mit höheren Molekulargewichten lieferten, als bei Verwendung der bei der radikalisch initiierten wässrigen Emulsionspolymerisation üblichen ethylenisch ungesättigten Verbindungen Vinylacetat, Vinylchlorid, Acrylsäuremethyl- bzw. -butylester. Dieses Verhalten wird insbesondere mit den bei den höheren Alkenen üblichen Wasserstoffradikalübetragungsreaktionen begründet.

Der vorliegenden Erfindung lag daher die Aufgabe zugrunde, wässrige Emulsionspolymerisate auf Basis der günstig-verfügbaren 5 bis 12 C-Atome aufweisenden Alkene zur Verfügung zu stellen, welche sich besonders als Klebstoffkomponenten, insbesondere Haftklebstoffkomponenten eignen.

Überraschender Weise wurde die Aufgabe durch das eingangs definierte Verfahren gelöst.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch induzierte wässrige Emulsionspolymerisationsreaktionen erfolgen üblicherweise dergestalt, dass man die ethylenisch ungesättigten Monomere unter Mitverwendung von Dispergiermitteln, im wässrigen Medium in Form von Monomerentröpfchen dispers verteilt und mittels eines radikalischen Polymerisationsinitiators polymerisiert. Von dieser Verfahrensweise unterscheidet sich das vorliegende Verfahren lediglich im Einsatz einer spezifischen Monomerenzusammensetzung.

Als Monomere A können alle linearen oder cyclischen 5 bis 12 C-Atome, bevorzugt 5 bis 10 C-Atome und insbesondere bevorzugt 6 bis 8 C-Atome aufweisenden Alkene eingesetzt werden, welche sich radikalisch copolymerisieren lassen und welche neben Kohlenstoff und Wasserstoff keine weiteren Elemente aufweisen. Hierzu zählen beispielsweise die linearen Alkene 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Penten-2, 2-Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethylhexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1,3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3, 4-Methylnonen-3, 5-Methylnonen-3, 6-Methylnonen-3, 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5, 4-Methyldecen-5, 5-Methyldecen-5, 6-Methyldecen-5, 7-Methyldecen-5, 8-Methyldecen-5, 9-Methyldecen-5, 2,4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methylundecen-2, 5-Methylundecen-2, 6-Methylundecen-2, 7-Methylundecen-2, 8-Methylundecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methylundecen-4, 6-Methylundecen-4, 7-Methylundecen-4, 8-Methylundecen-4, 9-Methylundecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Ddoecen-4, Dodecen-5 oder Dodecen-6 sowie die cyclischen Alkene Cyclopenten, 2-Methylcyclopenten-1, 3-Methylcyclopenten-1, 4-Methylcyclopenten-1, 3-Butylcyclopenten-1, Vinylcyclopentan, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, 4-Cyclopentylcyclohexen-1, Vinylcyclohexan, Cyclohepten, 1,2-Dimethylcyclohepten-1, Cyclooctem, 2-Methylcycloocten-1, 3-Methylcycloocten-1, 4-Methylcycloocten-1, 5-Methylcycloocten-1, Cyclononen, Cyclodecen, Cycloundecen, Cyclododecen, Bicyclo[2.2.1]hepten-2, 5-Ethylbicyclo[2.2.1]hepten-2, 2-Methylbicyclo [2.2.2]octen-2, Bicyclo[3.3.1]nonen-2 oder Bicyclo[3.2.2]nonen-6.

Bevorzugt werden die 1-Alkene eingesetzt, beispielsweise Penten-1, Hexen-1, Hepten-1, Octen-1, Nonen-1, Decen-1, Undecen-1, Dodecen-1, 2,4,4-Trimethylpenten-1, 2,4-Dimethylhexen-1, 6,6-Dimethylhepten-1 oder 2-Methylocten-1. Vorteilhaft wird als Monomer A ein 6 bis 8 C-Atome aufweisendes Alken, bevorzugt ein 6 bis 8 C-Atome aufweisendes 1-Alken eingesetzt. Insbesondere bevorzugt werden Hexen-1, Hepten-1 oder Octen-1 eingesetzt. Selbstverständlich können auch Gemische vorgenannter Monomere A eingesetzt werden.

Als Monomere B finden Ester auf Basis einer 3 bis 6 C-Atome, insbesondere einer 3 oder 4 C-Atome aufweisenden $\alpha,\beta$-monoethylenisch ungesättigten Mono- oder Dicarbonsäure, wie insbesondere Acrylsäure, Methacrylsäure, Maleinsäure, Fumarsäure und Itaconsäure und eines 1 bis 12 C-Atome aufweisenden Alkanols, vorzugsweise eines 1 bis 8 C-Atome aufweisenden Alkanols und insbesondere eines 1 bis 4 C-Atome aufweisenden Alkanols, wie insbesondere Methanol, Ethanol, n-Propanol, isoPropanol, n-Butanol, 2-Methylpropanol-1, tert.-Butanol, n-Pentanol, 3-Methylbutanol-1, n-Hexanol, 4-Methylpentanol-1, n-Heptanol, 5-Methylhexanol-1, n-Octanol, 6-Methylheptanol-1, n-Nonanol, 7-Methyloctanol-1, n-Decanol, 8-Methylnonanol-1, n-Dodecanol, 9-Methyldecanol-1 oder 2-Ethylhexanol-1 Verwendung. Vorzugsweise werden Acrylsäure- und Methacrylsäuremethyl-, -ethyl-, -n-butyl-, -iso-butyl-, pentyl-, - hexyl-, -heptyl-, -octyl-, -nonyl-, -decyl-, -2-ethylhexyl-, oder dodecylester, Fumar- und Maleinsäuredimethylester oder -di-n-butylester eingesetzt. Selbstverständlich können auch Gemische vorgenannter Ester eingesetzt werden.

Als Monomere C werden 3 bis 6 C-Atome aufweisende α,β-monoethylenisch ungesättigte Mono- oder Dicarbonsäuren und/oder deren Amide, wie insbesondere Acrylsäure, Methacrylsäure, Maleinsäure, Fumarsäure oder Itaconsäure bzw. Acrylamid oder Methacrylamid eingesetzt. Selbstverständlich können auch Gemische vorgenannter Monomere C eingesetzt werden.

Als Monomere D, welche sich von den Monomeren A bis C unterscheiden, finden beispielsweise α,β-ethylenisch ungesättigte Verbindungen, wie beispielsweise vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Nitrile α,β-mono- oder diethylenisch ungesättigter Carbonsäuren, wie Acrylnitril, Methacrylnitril, Fumarsäuredinitril, Maleinsäuredinitril sowie 4 bis 8 C-Atome aufweisende konjugierte Diene, wie 1,3-Butadien und Isopren, darüber hinaus Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino) ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid oder 2-(1-Imidazolin-2-onyl)ethylmethacrylat Verwendung. Weitere Monomere D weisen wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Glycidylacrylat oder-methacrylat, Diacetonacrylamid und Acetylacetoxyethylacrylat bzw. -methacrylat. Selbstverständlich können auch Gemische von Monomeren D eingesetzt werden.

Es werden zur radikalisch initiierten wässrigen Emulsionspolymerisation

| | |
|---|---|
| 1 bis 49,99 Gew.-% | Monomere A, und |
| 50 bis 98,99 Gew.-% | Monomere B, sowie |
| 0,01 bis 10 Gew.-% | Monomere C |

eingesetzt. Als Monomere A werden insbesondere Penten-1, Hexen-1, Hepten-1, Octen-1, 3-Methylhexen-1, 3-Methylhepten-1 und/oder 3-Methylocten-1, als Monomere B insbesondere n-Butylacrylat, Methylacrylat, 2-Ethylhexylacrylat, Methylmethacrylat und/oder tert.-Butylacrylat und als Monomere C insbesondere Acrylsäure, Methacrylsäure und/oder Itaconsäure eingesetzt.

Insbesondere bevorzugt werden zur radikalisch initiierten wässrigen Emulsionspolymerisation

| | |
|---|---|
| 5 bis 40 Gew.-% | Penten-1, Hexen-1 und/oder Octen-1 [Monomere A], und |
| 56 bis 94,9 Gew.-% | n-Butylacrylat, Methylacrylat, 2-Ethylhexylacrylat, Methylmethacrylat und/oder tert.-Butylacrylat [Monomere B], sowie |
| 0,1 bis 4 Gew.-% | Acrylsäure und/oder Methacrylsäure [Monomere C], |

eingesetzt.

Dabei kann jeweils wenigstens eine Teilmenge der Monomeren A bis D im wässrigen Reaktionsmedium vorgelegt werden und die gegebenenfalls verbliebene Restmenge dem wässrigen Reaktionsmedium, nach Initiierung der radikalischen Polymerisationsreaktion, diskontinuierlich in einer Portion, diskontinuierlich in mehreren Portionen sowie kontinuierlich mit gleichbleibenden oder sich verändernden Mengenströmen zugegeben werden. Es ist aber auch möglich, im wässrigen Reaktionsmedium wenigstens eine Teilmenge des radikalischen Polymerisationsinitiators vorzulegen, das erhaltene wässrige Reaktionsmedium auf Polymerisationstemperatur aufzuheizen und bei dieser Temperatur die Monomeren A bis D dem wässrigen Reaktionsmedium diskontinuierlich in einer Portion, diskontinuierlich in mehreren

Portionen sowie kontinuierlich mit gleichbleibenden oder sich verändernden Mengenströmen zuzugeben. Insbesondere vorteilhaft werden die Monomeren A bis D dem wässrigen Reaktionsmedium in Form einer Mischung zugegeben. Mit Vorteil erfolgt die Zugabe der Monomeren A bis D in Form einer wässrigen Monomerenemulsion. Erfindungsgemäß werden im Rahmen des vorliegenden Verfahrens Dispergiermittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergiermittel jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

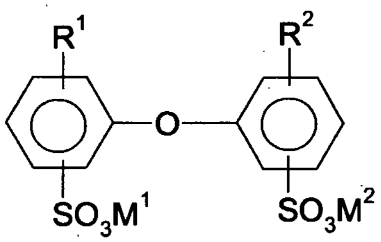

(I)

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, _ -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nücleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergiermittel bevorzugt eingesetzten Emulgatoren werden vorteilhaft in einer Gesamtmenge ≥ 0,005 und ≤ 10 Gew.%, vorzugsweise ≥ 0,01 und ≤ 5 Gew.-%, insbesondere ≥ 0,1 und ≤ 3 Gew.%, jeweils bezogen auf die Monomerengesamtmenge, eingesetzt.

Die Gesamtmenge der als Dispergiermittel zusätzlich oder statt der Emulgatoren eingesetzten Schutzkolloide beträgt oft ≥ 0,1 und ≤ 10 Gew.-% und häufig ≥ 0,2 und < 7 Gew.-%, jeweils bezogen die Monomerengesamtmenge.

Bevorzugt werden jedoch anionische und/oder nichtionische Emulgatoren und insbesondere bevorzugt anionische Emulgatoren als Dispergiermittel eingesetzt.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-butyl- oder Dicumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Monomerengesamtmenge, 0,01 bis 5 Gew.-%, bevorzugt 0,1 bis 3 Gew.-% und insbesondere bevorzugt 0,2 bis 1,5 Gew.-%.

Erfindungsgemäß kann die Gesamtmenge des Radikalinitiators im wässrigen Reaktionsmedium vorgelegt werden. Es ist aber auch möglich, gegebenenfalls lediglich eine Teilmenge des Radikalinitiators im wässrigen Reaktionsmedium vorzulegen und dann während der.erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Als Reaktionstemperatur für die erfindungsgemäße radikalische wässrige Emulsionspolymerisation kommt der gesamte Bereich von 0 bis 170°C in Betracht. Dabei werden in der Regel Temperaturen von 50 bis 120°C, häufig 60 bis 110°C und oft 70 bis 100°C angewendet. Die erfindungsgemäße radikalische wässrige Emulsionspolymerisation kann bei einem Druck kleiner, gleich oder größer 1 bar (absolut) durchgeführt werden, so dass die Polymerisationstemperatur 100°C übersteigen und bis zu 170°C betragen kann. Vorzugsweise werden leichtflüchtige Monomere, wie beispielsweise 2-Methylbuten-1, 3-Methylbuten-1, 2-Methylbuten-2, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emulsionspolymerisation bei 1 atm (1,01 bar absolut) unter Inertgasatmosphäre, wie beispielsweise unter Stickstoff oder Argon durchgeführt.

Das wässrige Reaktionsmedium kann prinzipiell in untergeordneten Mengen auch wasserlösliche organische

Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im erfindungsgemäßen Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldehyd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Monomerengesamtmenge, ist in der Regel ≤ 5 Gew.%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren A bis D während der Polymerisation zugeführt werden.

Die nach dem erfindungsgemäßen Verfahren zugänglichen Polymerisate können prinzipiell Glasübergangstemperaturen im Bereich von -70 bis +150°C, oft -30 bis +100°C und häufig -20 bis +50°C aufweisen. Sollen die wässrigen Polymerisatdispersion zur Herstellung von Klebstoffen, insbesondere Haftklebstoffen eingesetzt werden, so werden die Monomeren A bis D so gewählt, dass das erhaltene Polymerisat eine Glasübergangstemperatur $T_g \leq +20°C$ aufweist. Häufig werden die Monomeren A bis D so gewählt, dass Polymerisate mit einem Tg-Wert ≤ +10°C, ≤ 0°C, < -10°C, ≤ -20°C, ≤ -30°C, ≤ -40°C oder ≤ -50°C gebildet werden. Es können aber auch Polymerisate hergestellt werden, deren Glasübergangstemperaturen zwischen -70 und +10°C, zwischen -60 und -10°C oder zwischen -50 und -20°C liegen. Unter Glasübergangstemperatur wird hier die midpoint temperature nach ASTM D 3418-82 verstanden, ermittelt durch Differentialthermoanalyse (DSC) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter. Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Monomerengesamtmenge, erfolgen.

Eine Polymersaat wird insbesondere dann eingesetzt, wenn die Teilchengröße der mittels radikalisch wässriger Emulsionspolymerisation herzustellender Polymerpartikel gezielt eingestellt werden soll (siehe hierzu beispielsweise

US-A 2,520,959 und US-A 3,397,165).

Insbesondere wird eine Polymersaat eingesetzt, deren Polymersaatpartikel eine enge Teilchengrößenverteilung und gewichtsmittlere Durchmesser $D_w \leq 100$ nm, häufig≥5 5 nm bis ≤ 50 nm und oft ≥ 15 nm bis ≤ 35 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ [$D_{w50}/D_{N50}$] ≤2,0, bevorzugt ≤ 1,5 und insbesondere bevorzugt ≤ 1,2 oder < 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion; sie sind daher als Gew.-Teile Polymersaatfeststoff, bezogen auf die Monomerengesamtmenge, angegeben.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50°C, häufig ≥ 60°C oder ≥ 70°C und oft ≥ 80°C oder ≥ 90°C eingesetzt. Insbesondere bevorzugt ist eine Polystyrol- oder eine Polymethylmethacrylat-Polymersaat.

Die Gesamtmenge an Fremdpolymersaat kann vor Beginn der Zugabe der Monomeren A bis D im Reaktionsgefäß vorgelegt werden. Es ist aber auch möglich, lediglich eine Teilmenge der Fremdpolymersaat vor Beginn der Zugabe der Monomeren A bis D im Reaktionsgefäß vorzulegen und die verbleibende Restmenge während der Polymerisation zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Beginn der Zugabe der Monomeren A bis D im Reaktionsgefäß vorgelegt.

Die erfindungsgemäß erhaltene wässrige Polymerisatdispersion weist üblicherweise einen Polymerisatfeststoffgehalt von ≥ 10 und ≤ 80 Gew.%, häufig ≥ 20 und ≤ 70 Gew.-% und oft ≥ 25 und ≤ 60 Gew.%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel zwischen 10 und 2000 nm, häufig zwischen 20 und 1000 nm und oft zwischen 100 und 700 nm bzw. 100 bis 400 nm.

Häufig werden bei den erhaltenen wässrigen Polymerisatdispersionen die Restgehalte an nicht umgesetzten Monomeren sowie anderen leichtsiedenden Verbindungen durch dem Fachmann ebenfalls bekannte chemische und/ oder physikalische Methoden [siehe beispielsweise EP-A 771328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und 198 47 115] herabgesetzt.

Die nach dem erfindungsgemäßen Verfahren zugänglichen wässrigen Polymerisatdispersionen können insbesondere zur Herstellung von Klebstoffen, Dichtmassen, Kunststoffputzen, Papierstreichmassen, Faservliesen, Anstrichmitteln und Beschichtungsmitteln für organische Substrate, wie beispielsweise Leder oder textile Stoffe, sowie zur Modifizierung von mineralischen Bindemitteln eingesetzt werden.

Bei der Verwendung als Klebstoff, insbesondere als Haftklebstoff, wird den nach dem erfindungsgemäßen Verfahren zugänglichen wässrigen Polymerisatdispersionen vorzugsweise ein Tackifier, d.h. ein klebrigmachendes Harz zugesetzt. Tackifier sind beispielsweise aus Adhäsive Age, Juli 1987, Seiten 19 bis 23 oder Polym. Mater. Sci. Eng. 61 (1989), Seiten 588 bis 592, bekannt.

Tackifier sind z.B. Naturharze, wie Kolophoniumharze und deren durch Disproportionierung oder Isomerisierung, Polymerisation, Dimerisation oder Hydrierung entstehenden Derivate. Diese können in ihrer Salzform (mit z.B. ein- oder mehrwertigen Gegenionen [Kationen]) oder bevorzugt in ihrer veresterten Form vorliegen. Alkohole, die zur

Veresterung verwendet werden, können ein- oder mehrwertig sein. Beispiele sind Methanol, Ethandiol, Diethylenglykol, Triethylenglykol, 1,2,3-Propantriol (Glyzerin) oder Pentaerythrit.

Desweiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, $\alpha$-Methylstyrol oder Vinyltoluole Verwendung:

Als Tackifier werden zunehmend auch Polyacrylate, welche ein niedriges Molekulargewicht aufweisen, verwendet. Vorzugsweise haben diese Polyacrylate ein gewichtsmittleres Molekulargewicht unter 30.000 g/mol. Die Polyacrylate bestehen bevorzugt zu mindestens 60, insbesondere mindestens 80 Gew.-% aus $C_1$-$C_8$-Alkylacrylaten oder -methacrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäß zugänglichen wässrigen Polymerisatdispersionen zugesetzt werden. Vorzugsweise liegen die Tackifier dabei selbst in Form einer wässrigen Dispersion vor.

Die Menge der Tackifier beträgt vorzugsweise 5 bis 100 Gew.-%, besonders 10 bis 50 Gew.-%, jeweils bezogen auf die Gesamtmenge des Polymerisats (fest/fest).

Neben Tackifiern können selbstverständlich auch noch andere übliche Additive, beispielsweise Verdickungsmittel, Entschäumer, Weichmacher, Pigmente, Netzmittel oder Füllstoffe bei der Formulierung von Haftklebstoffen Verwendung finden.

Die wässrigen Polymerisatdispersionen können durch übliche Methoden, beispielsweise durch Rollen, Rakeln, Streichen etc. auf Substrate, wie beispielsweise Papier oder Polymerbänder und -folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metallobertlächen aufgebracht werden. Das Wasser kann in einfacher Weise durch Trocknung bei 50 bis 150°C entfernt werden. Zur späteren Verwendung kann die mit Haftklebstoff beschichtete Seite der Substrate, beispielsweise der Etiketten oder Bänder, mit einem Releasepapier, beispielsweise mit einem silikonisierten Papier, abgedeckt werden.

Die nach dem erfindungsgemäßen Verfahren zugänglichen wässrigen Polymerisatdispersionen eignen sich vorteilhaft als Komponente in Klebstoffen, insbesondere Haftklebstoffen. Dabei weisen diese erfindungsgemäßen Klebstoffe vorteilhaft eine verbesserte Adhäsion auf Kunststoffoberflächen, insbesondere Polyethylenoberflächen auf.

Folgendes Beispiel soll die Erfindung erläutern.

Beispiel

In einem 2 l-Vierhalskolben, ausgerüstet mit einem Anker-Rührer, Rückflußkühler und zwei Dosiereinrichtungen wurden unter Stickstoffatmosphäre 170 g entionisiertes Wasser, 16,2 g einer wässrigen Polystyrolsaat (Feststoffgehalt 33 Gew.-%, zahlenmittlerer Teilchendurchmesser 32 nm) und 0,5 g Natriumpersulfat vorgelegt und unter Rühren auf 80°C aufgeheizt. Beginnend bei 78°C wurde der Monomerzulauf, bestehend aus 210 g entionisiertem Wasser, 4,9 g einer 45 gew.%igen wässrigen Lösung von Dowfax® 2A1, 3,3 g einer 15 gew.%igen wässrigen Lösung von Natriumdodecylsulfat, 7,8 g einer 10 gew.%igen wässrigen Lösung von Natriumhydroxid, 19,6 g Acrylsäure, 245 g n-Butylacrylat und 196 g 1-Hexen und der Initiatorzulauf, bestehend aus 40 g entionisiertem Wasser und 2,9 g Natrimpersulfat, gleichzeitig gestartet und kontinuierlich über 3 Stunden zudosiert. Nach 2,5 Stunden wurden zusätzlich 29,4 g n-Butylacrylat in einer Portion zugegeben. Anschließend ließ man die erhaltenen wässrige Polymerisatdispersion noch 1 Stunde bei 80°C nachreagieren. Danach gab man der gerührten wässrigen Polymerisatdispersion 4,9 g einer 10 gew.-%igen wässrigen Lösung von Natriumhydroxid zu. Die Dispersion wurde 10 Minuten bei 80°C nachgerührt und dann auf 60°C gekühlt. Dem Reaktionsgemisch wurden danach 9,3 g einer 10 gew.%igen wässrigen Lösung von tert.-Butylhydroperoxid und ein Gemisch, bestehend aus 20 g entionisiertem Wasser, 1 g Natriumdisulfit und 0,6 g Aceton, über getrennte Zuläufe während 1 Stunde kontinuierlich zudosiert. Anschließend wurde die wässrige Polymerisatdispersion auf Raumtemperatur abgekühlt und mit 22 g einer 10 gew.-%igen wässrigen Lösung von Natriumhydroxid versetzt. Die wässrige Polymerisatdispersion wies einen Feststoffgehalt von 40 Gew.-%, bezogen auf das Gesamtgewicht der wässrigen Dispersion, auf. Die Glasübergangstemperatur des Polymerisats betrug -42°C.

Die Feststoffgehalt wurde bestimmt, indem eine definierte Menge der wässrigen Polymerisatdispersion (ca. 5 g) bei 140°C in einem Trockenschrank bis zur Gewichtskonstanz getrocknet wurde. Es wurden zwei separate Messungen durchgeführt. Der im Beispiel angegebene Wert stellt den Mittelwert der beiden Messergebnisse dar.

Die Bestimmung der Glasübergangstemperatur erfolgte gemäß DIN 53765 mittels eines DSC 820-Geräts, Serie TA 8000 der Fa. Mettler-Toledo.

Vergleichsdispersion

Als Vergleichsdispersion wurde Acronal® DS 3547 (Verkaufsprodukt der BASF AG) gewählt, einer wässrigen Polymerisatdispersion auf Basis von n-Butylacrylat/Ethylacrylat) mit einem Feststoffgehalt von 57 Gew.-% und einer identischen Glasübergangstemperatur des Polymerisats von -42°C.

Anwendungstechnische Untersuchungen

Die Polymerisate der erfindungsgemäßen Polymerisatdispersion bzw. der Vergleichsdispersion wurden anwendungstechnisch auf deren Haftklebstoffeigenschaften untersucht. Dabei wurde wie folgt vorgegangen:

Herstellung der Prüfstreifen

Die zu prüfende wässrige Polymerisatdispersion wurde ohne Zusatz von Tackifiern untersucht. Dazu wurde die wässrige Polymerisatdispersion mit einem Rakel in dünner Schicht auf eine handelsübliche Polyesterfolie (Hostaphanfolie RN 36) aufgetragen und 3 Minuten im Trockenschrank bei 90°C getrocknet. Die Spalthöhe des Rakel wurde dabei so gewählt, dass sich für das getrocknete Polymerisat (Haftklebstoff) eine Auftragsmenge von 29 bis 31 g/$m^2$ ergab. Auf das getrocknete Polymerisat legte man silikonisiertes Papier auf und rollte es mit einem Handroller fest an. Das so hergestellte Folienlaminat wurde in 25 cm lange und 2,5 cm breite Streifen geschnitten. Diese Streifen lagerte man vor der Prüfung mindestens 24 Stunden bei 23°C und 50 % relative Luftfeuchtigkeit.

Prüfung der Schälfestigkeit (in Anlehnung an FINAT FTM 1)

Nach dem Abziehen des silikonisierten Papiers klebte man bei 23°C und 50% relative Luftfeuchtigkeit einen Prüfstreifen auf eine Polyethylenprüfoberfläche.

Nach Ablauf einer vorgegebenen Kontaktzeit von 1 Minute bzw. 24 Stunden wurde der Streifen mit Hilfe einer Zugprüfmaschine in einem Winkel von 180° mit einer Geschwindigkeit von 300 mm pro Minute von der Prüfoberfläche abgezogen. Die hierfür erforderliche Kraft ist ein Maß für die Adhäsion. Sie wird als Schälfestigkeit bezeichnet und in Newton pro 2,5 cm (N/2,5 cm) angegeben. Die Adhäsion ist umso höher, je höher der Wert für die Schälfestigkeit nach der angegebenen Zeit ist. Pro Polymerisat wurden drei unabhängige Bestimmungen durchgeführt. Die in Tabelle 1 angegebenen Werte stellen Mittelwerte aus diesen drei Bestimmungen dar.

Tabelle 1: Zusammenfassende Darstellung der Schälfestigkeit

| Polymerisat aus | Schälfestigkeit in N/2,5 cm | |
|---|---|---|
| | nach 1 Minute | nach 24 Stunden |
| erfindungsgemäßer Dispersion | 7,6 | 8,0 |
| Vergleichsdispersion | 3,0 | 5,4 |

Wie aus Tabelle 1 klar ersichtlich ist, weist der erfindungsgemäße Haftklebstoff im Vergleich zum Vergleichsklebstoff mit identischer Glasübergangstemperatur, sowohl nach 1 Minute, wie auch nach 24 Stunden deutlich höhere Schälfestigkeiten (Adhäsion) auf einer Polyethylenoberfläche auf.

## Patentansprüche

**1.** Verfahren zur Herstellung einer wässrigen Polymerisatdispersion durch radikalisch initiierte wässrige Emulsionspolymerisation von ethylenisch ungesättigten Monomeren in Anwesenheit wenigstens eines Dispergiermittels und wenigstens eines Radikalinitiators, **dadurch gekennzeichnet, dass** zur Emulsionspolymerisation

| | |
|---|---|
| 1 bis 49,99 Gew.-% | eines 5 bis 12 C-Atome aufweisenden Alkens [Monomer A], und |
| 50 bis 98,99 Gew.-% | eines Esters auf Basis einer 3 bis 6 C-Atome aufweisenden $\alpha,\beta$-monoethylenisch ungesättigten Mono- oder Dicarbonsäure und eines 1 bis 12 C-Atome aufweisenden Alkanols [Monomer B], und |
| 0,01 bis 10 Gew.-% | einer 3 bis 6 C-Atome aufweisenden $\alpha,\beta$-monoethylenisch ungesättigten Mono- oder Dicarbonsäure und/oder deren Amid [Monomer C] |

eingesetzt werden und sich die Monomeren A bis C zu 100 New.-% addieren.

2. Verfahren nach Anspruch 1, **dadurch gekennzeichnet, dass** als Monomer A ein 1-Alken eingesetzt wird.

3. Verfahren nach einem der Ansprüche 1 und 2, **dadurch gekennzeichnet, dass** als Monomer B ein Ester auf Basis einer 3 oder 4 C-Atome aufweisenden α,β-monoethylenisch ungesättigten Mono- oder Dicarbonsäure und eines 1 bis 8 C-Atome aufweisenden Alkanols eingesetzt wird.

4. Verfahren nach einem der Ansprüche 1 bis 3, **dadurch gekennzeichnet, dass** als Monomer A ein 6 bis 8 C-Atome aufweisendes Alken eingesetzt wird.

5. Wässrige Polymerisatdispersion erhältlich nach einem Verfahren gemäß einem der Ansprüche 1 bis 4.

6. Verwendung einer wässrigen Polymerisatdispersion gemäß Anspruch 5 zur Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln.

7. Klebstoff, enthaltend eine wässrige Polymerisatdispersion gemäß Anspruch 5.

8. Substrat, beschichtet mit einem Klebstoff gemäß Anspruch 7.

## Claims

1. A process for preparing an aqueous polymer dispersion by free-radically initiated aqueous emulsion polymerization of ethylenically unsaturated monomers in the presence of at least one dispersant and at least one free-radical initiator, which comprises using

| | |
|---|---|
| 1 to 49.99% | by weight of an alkene of 5 to 12 carbon atoms [monomer A] and |
| 50 to 98.99% | by weight of an ester based on an α,β-monoethylenically unsaturated monocarboxylic or dicarboxylic acid of 3 to 6 carbon atoms and an alkanol of 1 to 12 carbon atoms [monomer B], and, |
| 0.01 to 10% | by weight of an α,β-monoethylenically unsaturated monocarboxylic or dicarboxylic acid of 3 to 6 carbon atoms and/or amide thereof [monomer C] |

for the emulsion polymerization, monomers A to C adding to 100% by weight.

2. The process according to claim 1, wherein a 1-alkene is used as monomer A.

3. The process according to either of claims 1 and 2, wherein an ester based on an α,β-monoethylenically unsaturated monocarboxylic or dicarboxylic acid of 3 or 4 carbon atoms and an alkanol of 1 to 8 carbon atoms is used as monomer B.

4. The process according to any one of claims 1 to 3, wherein an alkene of 6 to 8 carbon atoms is used as monomer A.

5. An aqueous polymer dispersion obtainable by a process according to any one of claims 1 to 4.

6. The use of an aqueous polymer dispersion according to claim 5 for producing an adhesive, sealant, polymeric render, paper coating slip, fiber web, paint or coating material for an organic substrate or for modifying a mineral binder.

7. An adhesive comprising an aqueous polymer dispersion according to claim 5.

8. A substrate coated with an adhesive according to claim 7.

## Revendications

1. Procédé pour la préparation d'une dispersion aqueuse d'un polymère par une polymérisation en émulsion aqueuse initiée par voie radicalaire de monomères éthyléniquement insaturés en présence d'au moins un dispersant et d'au moins un initiateur de radicaux, **caractérisé en ce que**, pour la polymérisation en émulsion, on utilise

   - 1 à 49,99% en poids d'un alcène présentant 5 à 12 atomes de carbone [monomère A] et
   - 50 à 98,99% en poids d'un ester à base d'un acide monocarboxylique ou dicarboxylique éthyléniquement α,β-monoinsaturé présentant 3 à 6 atomes de carbone et d'un alcanol présentant 1 à 12 atomes de carbone [monomère B], et
   - 0,01 à 10% en poids d'un acide monocarboxylique ou dicarboxylique éthyléniquement α,β-monoinsaturé comprenant 3 à 6 atomes de carbone et/ou son amide [monomère C]

   et les monomères A à C forment 100% en poids au total.

2. Procédé selon la revendication 1, **caractérisé en ce qu'**on utilise un 1-alcène comme monomère A.

3. Procédé selon l'une quelconque des revendications 1 et 2, **caractérisé en ce qu'**on utilise comme monomère B un ester à base d'un acide monocarboxylique ou dicarboxylique éthyléniquement α,β-monoinsaturé présentant 3 ou 4 atomes de carbone et d'un alcanol présentant 1 à 8 atomes de carbone.

4. Procédé selon l'une quelconque des revendications 1 à 3, **caractérisé en ce qu'**on utilise comme monomère A un alcène présentant 6 à 8 atomes de carbone.

5. Dispersion aqueuse de polymère pouvant être obtenue selon un procédé selon l'une quelconque des revendications 1 à 4.

6. Utilisation d'une dispersion aqueuse de polymère selon la revendication 5 pour la préparation d'adhésifs, de masses d'étanchéité, d'enduits en matériau synthétique, de masses de couchage pour papier, de non-tissés en fibres, de peintures et d'agents de revêtement pour des substrats organiques ainsi que pour la modification de liants minéraux.

7. Adhésif contenant une dispersion aqueuse de polymère selon la revendication 5.

8. Substrat revêtu par un adhésif selon la revendication 7.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03042254 A
- WO 03091297 A
- EP 1384729 A
- US 4921898 A
- US 5070134 A
- US 5110856 A
- US 5629370 A
- EP 295727 A
- EP 757065 A
- EP 1114833 A
- DE 19620817 A
- DE OS1720277 A
- DE 4003422 A
- US 4269749 A
- US 2520959 A
- US 3397165 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- **A. SEN et al.** *Journal American Chemical Society,* 2001, vol. 123, 12738-12739
- **B. KLUMPERMAN et al.** *Macromolecules,* 2004, vol. 37, 4406-4416
- **A. SEN et al.** *Journal of Polymer Science, Part A: Polymer Chemistry,* 2004, vol. 42 (24), 6175-6192
- *J. Macromol. Sci. Chem.,* 1983, vol. A19 (1), 107-122
- Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **H. STACHE.** Tensid-Taschenbuch. Carl-Hanser-Verlag, 1981
- **MCCUTCHEON'S.** Emulsifiers & Detergents. MC Publishing Company, 1989
- **J. BRANDRUP ; E.H. IMMERGUT.** Polymerhandbook. John Wiley & Sons, 1989, 133-141
- Ullmann's Encyclopedia of Industrial Chemistry. Verlag Chemie, 1992, 169
- **ZOSEL.** *Farbe und Lack,* 1976, vol. 82, 125-134
- **T.G. FOX.** *Bull. Am. Phys. Soc.,* 1956, vol. II (1), 123
- Ullmann's Encyclopädie der technischen Chemie. Verlag Chemie, 1980, vol. 19, 18
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Ullmann's Cncyclopedia of Industrial Chemistry. Verlag Chemie, 1992, 169
- Analytical Ultracentrifugation in Biochemistry and Polymer Science, Royal Society of Chemistry. **S.E. HARDING et al.** Analysis of Polymer Dispersions with an Eight-Cell-AUC-Multiplexer: High Resolution Particle Size Distribution and Density Gradient Techniques. 147-175
- *Tackifier sind beispielsweise aus Adhäsive Age,* Juli 1987, 19-23
- *Polym. Mater. Sci. Eng.,* 1989, vol. 61, 588-592